# EUROPEAN PATENT SPECIFICATION

(11) **EP 3 640 504 B1**
(45) Date of publication and mention of the grant of the patent: **31.03.2021**
(21) Application number: 18823417.3
(22) Date of filing: 22.06.2018
(51) Int. Cl.: F16H 61/02, F16H 59/74

(54) **METHOD AND DEVICE FOR DETERMINING MAXIMUM GEAR RATIO OF TRANSMISSION**
VERFAHREN UND VORRICHTUNG ZUR BESTIMMUNG DES MAXIMALEN ÜBERSETZUNGSVERHÄLTNISSES EINES GETRIEBES
PROCÉDÉ ET DISPOSITIF POUR DÉTERMINER LE RAPPORT DE TRANSMISSION MAXIMAL D'UNE TRANSMISSION

(30) Priority: 28.06.2017 CN 201710510218
(43) Date of publication of application: 22.04.2020
(73) Proprietor: Great Wall Motor Company Limited, Baoding, Hebei 071000 (CN)
(72) Inventor: LU, Lipeng, Baoding Hebei 071000 (CN); XU, Jian, Baoding Hebei 071000 (CN); LU, Yongxin, Baoding Hebei 071000 (CN)
(74) Representative: Nederlandsch Octrooibureau
(86) International application number: PCT/CN2018/092496
(87) International publication number: WO 2019/001372

(56) References cited:
- EP-A1- 0 719 966
- CN-A- 103 213 544
- CN-A- 105 782 428
- CN-A- 106 224 537
- GB-A- 2 030 661
- US-A1- 2008 027 612
- US-A1- 2017 159 802

## Description

### Field of the Invention

The present invention relates to the technical field of vehicle gear ratio determination, and in particular, to a method and device for determining the highest gear ratio of a transmission.

### Background of the Invention

Vehicle fuel economy refers to a vehicle's ability to travel economically with as little fuel consumption as possible. The main evaluation indicators include combined fuel consumption and constant-speed fuel consumption. The combined fuel consumption mainly evaluates the rationality of the matching of a vehicle engine, gear ratios of a transmission and vehicle parameters. The constant-speed fuel consumption mainly evaluates the rationality of the matching of a vehicle engine and a certain gear of a transmission.

With the increasing range of gear ratios of a transmission and the increasing number of gears, in order to improve the performance of a vehicle, the gear ratio of each gear needs to be determined. Considering the influence of vehicle driving mode, axle load distribution, and torque-limited gears of the transmission, a method of determining the gear ratio of the first gear of a transmission is relatively simple. However, a high gear of the transmission mainly pursues economy, while the range and use frequency should also be considered.

At present, there is no process and method for determining the highest gear ratio of a transmission in the market. Therefore, it is not possible to evaluate the matching status of a vehicle engine, the highest gear of a transmission, and an entire vehicle in the early stage of a project, so that problems cannot be found in time. And if the highest gear ratio of the transmission is found to have the problem of fuel economy or use frequency in the late stage of the project, as the entire vehicle design has been basically frozen and some molds and equipment have been purchased in place, the change possibility is relatively low, and it will also take a long time with a relatively large input cost. Not only is the efficiency low, but also the desired effect cannot be achieved, thus affecting a driver's experience EP 0 719 966 A1 discloses a method for selecting the best ratio for fuel economy when driving but not for determining the highest gear ratio of a transmission. CN 105 782 428 A discloses a design method for determining a transmission parameter for an electric vehicle.

### Summary of the Invention

In view of this, the present invention aims to provide a method for determining the highest gear ratio of a transmission, so as to solve the problems of a long time, high input cost, and overall low efficiency in determining the highest gear ratio of the transmission.

To achieve the above object, a technical solution of the present invention is implemented as follows.

A method for determining the highest gear ratio of a transmission comprises:
determining corresponding minimum engine fuel consumption rates when a vehicle travels at multiple constant vehicle speeds, and engine rotation speeds corresponding to the minimum engine fuel consumption rates based on engine fuel consumption characteristic data, wherein the multiple vehicle speeds are chosen from a vehicle speed range corresponding to the highest gear of the transmission;
determining a gear ratio corresponding to each minimum engine fuel consumption rate for each of the minimum engine fuel consumption rates,, wherein the gear ratio is a ratio of an engine rotation speed corresponding to the minimum engine fuel consumption rate to a vehicle speed;
obtaining a weighted average value of the corresponding engine fuel consumption rates when the vehicle travels at the constant vehicle speeds under each gear ratio;
determining the gear ratio, corresponding to the minimum value among obtained weighted average values of the engine fuel consumption rates, as the highest gear ratio of the the transmission.

Further, the step of determining corresponding minimum engine fuel consumption rates when a vehicle travels at multiple constant vehicle speeds, and engine rotation speeds corresponding to the minimum engine fuel consumption rates based on engine fuel consumption characteristic data comprises:
respectively calculating engine powers when the vehicle travels at each of the constant vehicle speeds for the multiple constant vehicle speeds;
determining minimum engine fuel consumption rates under each of the engine powers and engine rotation speeds corresponding to the minimum engine fuel consumption rates based on the engine fuel consumption characteristic data.

Further, the step of determining minimum engine fuel consumption rates under each of the engine powers and engine rotation speeds corresponding to the minimum engine fuel consumption rates based on the engine fuel consumption characteristic data comprises:
generating an engine fuel consumption characteristic map based on the engine fuel consumption characteristic data;
determining minimum engine fuel consumption rates under each of the engine powers and engine rotation speeds corresponding to the minimum engine fuel consumption rates according to the engine fuel consumption characteristic map.

Further, the step of determining minimum engine fuel consumption rates under each of the engine powers and engine rotation speeds corresponding to the minimum engine fuel consumption rates based on the engine fuel consumption characteristic data comprises:
performing interpolation operation based on the engine fuel consumption characteristic data to obtain minimum engine fuel consumption rates under each of the engine powers and engine rotation speeds corresponding to the minimum engine fuel consumption rates.

Further, the step of obtaining a weighted average value of the corresponding engine fuel consumption rates when the vehicle travels at the constant vehicle speeds under each gear ratio comprises:
obtaining engine fuel consumption rates when the vehicle travels at the constant vehicle speeds under each gear ratio;
performing weighted averaging on the engine fuel consumption rates corresponding to the vehicle speeds under each gear ratio to obtain a weighted average value of the engine fuel consumption rates under each gear ratio, wherein a weight of the engine fuel consumption rates corresponding to the vehicle speeds is set according to the use frequency of the vehicle speeds.

Compared with the prior art, the method for determining the highest gear ratio of a transmission according to the present invention has the following advantages.

Starting from a vehicle speed range corresponding to the highest gear of an entire vehicle and the vehicle speed use frequency, each gear ratio is obtained by using minimum engine fuel consumption rates under engine powers corresponding to vehicle speeds, and then the gear ratio, corresponding to the minimum value among the weighted average values of the engine fuel consumption rates, is determined as the highest gear ratio of the transmission according to weighted average values of engine fuel consumption rates under each gear ratio, to obtain the highest gear ratio of the transmission in consideration of fuel economy with less time, lower input cost and higher overall efficiency.

Another object of the present invention is to provide a device for determining the highest gear ratio of a transmission, so as to solve the problems of a long time, high input cost, and overall low efficiency in determining the highest gear ratio of the transmission.

To achieve the above object, a technical solution of the present invention is implemented as follows.

A device for determining the highest gear ratio of a transmission comprises:
a fuel consumption determination module, configured to determine corresponding minimum engine fuel consumption rates when a vehicle travels at multiple constant vehicle speeds, and engine rotation speeds corresponding to the minimum engine fuel consumption rates based on engine fuel consumption characteristic data, wherein the multiple vehicle speeds are chosen from a vehicle speed range corresponding to the highest gear of the transmission;
a gear ratio calculation module, configured to determine a gear ratio corresponding to each minimum engine fuel consumption rate for each of the minimum engine fuel consumption rates, wherein the gear ratio is a ratio of an engine rotation speed corresponding to the minimum engine fuel consumption rate to a vehicle speed;
an obtaining module, configured to obtain a weighted average value of the corresponding engine fuel consumption rates when the vehicle travels at the constant vehicle speeds under each gear ratio;
a gear ratio determination module, configured to determine the gear ratio, corresponding to the minimum value among obtained weighted average values of the engine fuel consumption rates, as the highest gear ratio of the transmission.

Further, the fuel consumption determination module comprises:
a power calculation unit, configured to respectively calculate engine powers when the vehicle travels at each of the constant vehicle speeds for the multiple constant vehicle speeds;
a fuel consumption obtaining unit, configured to determine minimum engine fuel consumption rates under each of the engine powers and engine rotation speeds corresponding to the minimum engine fuel consumption rates based on the engine fuel consumption characteristic data.

Further, the fuel consumption obtaining unit is specifically configured to generate an engine fuel consumption characteristic map based on the engine fuel consumption characteristic data; determine minimum engine fuel consumption rates under each of the engine powers and engine rotation speeds corresponding to the minimum engine fuel consumption rates according to the engine fuel consumption characteristic map.

Further, the fuel consumption obtaining unit is specifically configured to perform interpolation operation based on the engine fuel consumption characteristic data to obtain minimum engine fuel consumption rates under each of the engine powers, and engine rotation speeds corresponding to the minimum engine fuel consumption rates.

Further, the obtaining module is specifically configured to obtain engine fuel consumption rates when the vehicle travels at the constant vehicle speeds under each gear ratio; perform weighted averaging on the engine fuel consumption rates corresponding to the vehicle speeds under each gear ratio to obtain a weighted average value of the engine fuel consumption rates under each gear ratio, wherein a weight of the engine fuel consumption rates corresponding to the vehicle speeds is set according to the use frequency of the vehicle speeds.

The device for determining the highest gear ratio of a transmission has the same advantages as the method for determining the highest gear ratio of a transmission compared with the prior art, and details are not repeated here.

### Brief Description of Drawings

The drawings, which form a part of the present invention, are used to provide a further understanding of the present invention. The exemplary embodiments of the present invention and the description thereof are used to explain the present invention, and do not constitute an improper limitation on the present invention. In the drawings:
FIG. 1 is a flow chart showing a method for determining the highest gear ratio of a transmission according to an exemplary embodiment.
FIG. 2 is a block diagram showing a device for determining the highest gear ratio of a transmission according to an exemplary embodiment.
FIG. 3 is a block diagram showing a device for determining the highest gear ratio of a transmission according to an exemplary embodiment.

### Description of Reference signs:

11-Fuel consumption determination module, 12-Gear ratio calculation module, 13-Obtaining module, 14-Gear ratio determination module, 111-Power calculation unit, 112-Fuel consumption obtaining unit.

### Detailed Description of the Embodiments

It should be noted that, in the case of no conflict, the embodiments of the present invention and features in the embodiments can be combined with each other.

The present invention will be described in detail below with reference to the drawings and embodiments.

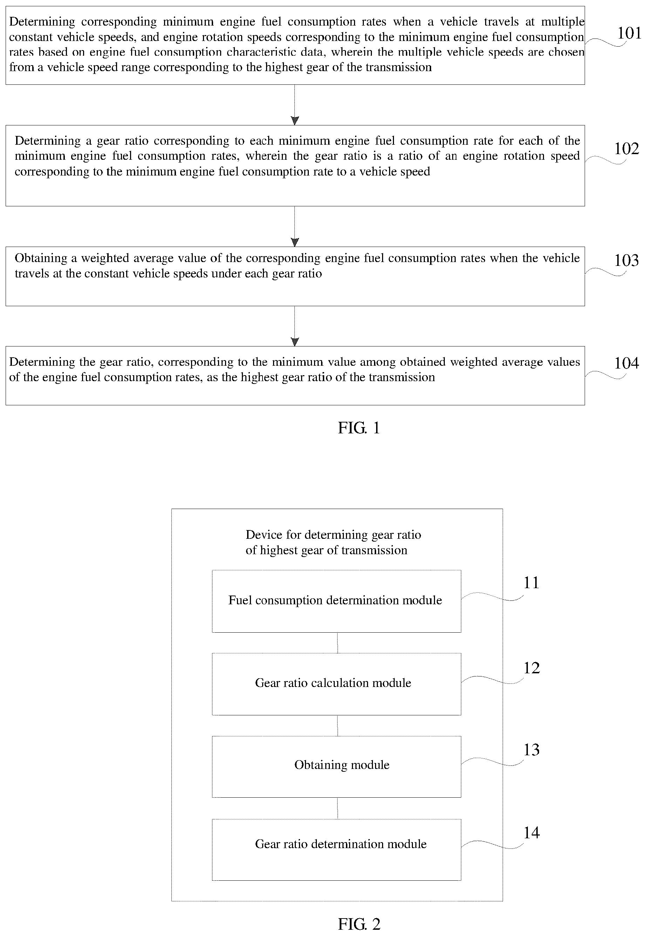

FIG. 1 is a flow chart showing a method for determining the highest gear ratio of a transmission according to an exemplary embodiment. As shown in FIG. 1, a method for determining the highest gear ratio of a transmission is used in a device for determining the highest gear ratio of a transmission. A method for determining the highest gear ratio of a transmission comprises the following steps.

Step 101, corresponding minimum engine fuel consumption rates when a vehicle travels at multiple constant vehicle speeds, and engine rotation speeds corresponding to the minimum engine fuel consumption rates are determined based on engine fuel consumption characteristic data, wherein the multiple vehicle speeds are chosen from a vehicle speed range corresponding to the highest gear of the transmission.

The engine fuel consumption characteristic data is the combination of all load characteristic and speed characteristic data of an engine, and can represent the change relationship of main parameters of the engine in the entire working range. The most economical working area of the engine can be determined by the engine fuel consumption characteristic data. In the process of engine parameter matching, by matching parameters in the engine fuel consumption characteristic data, the best performance area can fall within the most commonly used operating range. For example, when the engine outputs a certain power to the vehicle, an engine rotation speed corresponding to the minimum engine fuel consumption rate corresponding to an equi-power line corresponding to the power can be found. In addition, in the early stage of a project, there is usually a preliminary plan for gears and speeds of a vehicle transmission. For example, a transmission has 6 gears, and the vehicle speed range of the highest gear (i.e., the sixth gear) is 70 km/h to 180 km/h. In order to determine the highest gear ratio of the transmission, multiple vehicle speeds can be selected from the vehicle speed range corresponding to the highest gear of the transmission, then a gear ratio suitable for the highest gear of the transmission is determined according to fuel consumption information corresponding to the multiple vehicle speeds, and the gear ratio enables the vehicle to travel economically in the highest gear.

In this embodiment, engine powers when the vehicle travels at the multiple constant vehicle speeds are respectively calculated first; and then, minimum engine fuel consumption rates under each of the engine powers and engine rotation speeds corresponding to the minimum engine fuel consumption rates are determined based on the engine fuel consumption characteristic data. When the vehicle travels at different constant vehicle speeds, the powers generated by the engine are different. At different rotation speeds and torques of the engine, engine fuel consumption rates corresponding to the same engine power are also different. Therefore, it is necessary to determine corresponding minimum engine fuel consumption rates under the engine powers when the vehicle travels at the constant vehicle speeds, and engine rotation speeds corresponding to the minimum engine fuel consumption rates.

Optionally, a vehicle speed may be selected from a vehicle speed range corresponding to the highest gear of the transmission as an integral multiple of 10 km/h. For example, the vehicle speed range of the highest gear (i.e., the sixth gear) is 70 km/h to 180 km/h, and the selected vehicle speeds are 70 km/h, 80 km/h, 90 km/h, 100 km/h, 110 km/h, 120 km/h, 130 km/h, 140 km/h, 150 km/h, 160 km/h, 170 km/h, and 180 km/h, respectively.

Optionally, when minimum engine fuel consumption rates under each of the engine powers and engine rotation speeds corresponding to the minimum engine fuel consumption rates are determined based on the engine fuel consumption characteristic data, an engine fuel consumption characteristic map may be generated based on the engine fuel consumption characteristic data, and minimum engine fuel consumption rates under each of the engine powers and engine rotation speeds corresponding to the minimum engine fuel consumption rates are determined according to the engine fuel consumption characteristic map; interpolation operation may also be performed based on the engine fuel consumption characteristic data to obtain minimum engine fuel consumption rates under each of the engine powers and engine rotation speeds corresponding to the minimum engine fuel consumption rates. In this embodiment, MATLAB or UNIPLOT software may be used to import the engine fuel consumption characteristic data into the software, and then MATLAB or UNIIPLOT software generates an engine fuel consumption characteristic map or performs interpolation operation, thereby obtaining minimum engine fuel consumption rates under each of the engine powers, and engine rotation speeds corresponding to the minimum engine fuel consumption rates.

Step 102, a gear ratio corresponding to each minimum engine fuel consumption rate is determined for each of the minimum engine fuel consumption rates, wherein the gear ratio is a ratio of an engine rotation speed corresponding to the minimum engine fuel consumption rate to a vehicle speed.

Through step 101, corresponding minimum engine fuel consumption rates when a vehicle travels at multiple constant vehicle speeds, and engine rotation speeds corresponding to the minimum engine fuel consumption rates can be determined. As the gear ratio is a ratio of an engine rotation speed corresponding to the minimum engine fuel consumption rate to a vehicle speed, the gear ratio corresponding to each minimum engine fuel consumption rate can be determined through step 102, and the gear ratios are also in one-to-one correspondence to the vehicle speeds.

Step 103, a weighted average value of the corresponding engine fuel consumption rates when the vehicle travels at the constant vehicle speeds under each gear ratio is obtained.

In this step, when the vehicle travels at the constant vehicle speeds under each gear ratio, the respective engine fuel consumption rates corresponding to the vehicle speeds are obtained; then weighted averaging is performed on the engine fuel consumption rates corresponding to the vehicle speeds under each gear ratio to obtain a weighted average value of the engine fuel consumption rates under each gear ratio, wherein a weight of the engine fuel consumption rates corresponding to the vehicle speeds is set according to the use frequency of the vehicle speeds.

For example, according to the above example, 12 vehicle speeds are selected, and the 12 vehicle speeds correspond to 12 gear ratios; under a certain gear ratio, the vehicle travels at 12 constant vehicle speeds respectively; respective engine fuel consumption rates corresponding to the 12 vehicle speeds can be obtained based on engine fuel consumption characteristic data; the weight of each vehicle speed has been set according to the use frequency of the 12 vehicle speeds. For example, if the 12 vehicle speeds are used with the same frequency, the weight of each vehicle speed is 0.083; if the three vehicle speeds, 80 km/h, 90 km/h, and 100 km/h, are used more frequently, higher weights are set for the three vehicle speeds, while lower weights are set for the other vehicle speeds. The sum of the weights of all vehicle speeds is 1. Under the certain gear ratio, a weighted average value of the engine fuel consumption rates under this gear ratio can be obtained by performing weighted averaging on the engine fuel consumption rates of the 12 vehicle speeds.

Step 104, the gear ratio, corresponding to the minimum value among obtained weighted average values of the engine fuel consumption rates, is determined as the highest gear ratio of the transmission.

The gear ratio, corresponding to the the minimum value among the weighted average values of the engine fuel consumption rates corresponding to the gear ratios obtained in step 103, is determined as the highest gear ratio of the transmission. Under the corresponding gear ratio, this minimum indicates the smallest engine fuel consumption rate obtained after the weighted averaging when the vehicle travels at the constant vehicle speeds. This gear ratio is determined as the highest gear ratio of the transmission, which meets the requirements of the highest gear for economical travelling.

In this embodiment, starting from a vehicle speed range corresponding to the highest gear of an entire vehicle and the vehicle speed use frequency, each gear ratio is obtained by using minimum engine fuel consumption rates under engine powers corresponding to vehicle speeds, and then the gear ratio, corresponding to the minimum value among the weighted average values of the engine fuel consumption rates, is determined as the highest gear ratio of the transmission according to weighted average values of engine fuel consumption rates under each gear ratio, to obtain the highest gear ratio of the transmission in consideration of fuel economy with less time, lower input cost and higher overall efficiency.

FIG. 2 is a block diagram showing a device for determining the highest gear ratio of a transmission according to an exemplary embodiment. As shown in FIG. 2, a device for determining the highest gear ratio of a transmission comprises: a fuel consumption determination module 11, a gear ratio calculation module 12, an obtaining module 13 and a gear ratio determination module 14.

The fuel consumption determination module 11 is configured to determine corresponding minimum engine fuel consumption rates when a vehicle travels at multiple constant vehicle speeds, and engine rotation speeds corresponding to the minimum engine fuel consumption rates based on engine fuel consumption characteristic data, wherein the multiple vehicle speeds are chosen from a vehicle speed range corresponding to the highest gear of the transmission.

The gear ratio calculation module 12 is configured to determine a gear ratio corresponding to each minimum engine fuel consumption rate for each of the minimum engine fuel consumption rates, wherein the gear ratio is a ratio of an engine rotation speed corresponding to the minimum engine fuel consumption rate to a vehicle speed.

The obtaining module 13 is configured to obtain a weighted average value of the corresponding engine fuel consumption rates when the vehicle travels at the constant vehicle speeds under each gear ratio.

The gear ratio determination module 14 is configured to determine the gear ratio, corresponding to the minimum value among obtained weighted average values of the engine fuel consumption rates, as the highest gear ratio of the transmission.

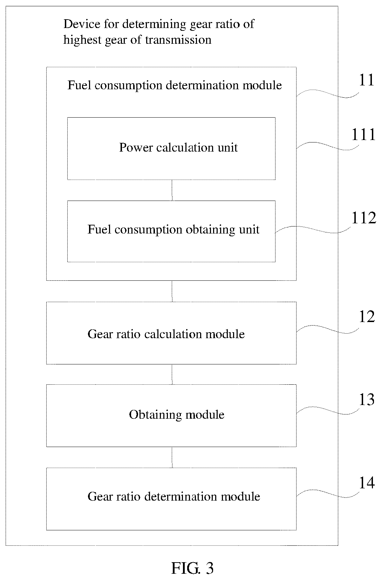

FIG. 3 is a block diagram showing a device for determining the highest gear ratio of a transmission according to an exemplary embodiment. As shown in FIG. 3, on the basis of the block diagram shown in FIG. 2, the fuel consumption determination module 11 comprises: a power calculation unit 111 and a fuel consumption obtaining unit 112.

The power calculation unit 111 is configured to respectively calculate engine powers when the vehicle travels at each of the constant vehicle speeds for the multiple constant vehicle speeds.

The fuel consumption obtaining unit 112 is configured to determine minimum engine fuel consumption rates under each of the engine powers and engine rotation speeds corresponding to the minimum engine fuel consumption rates based on the engine fuel consumption characteristic data.

Further, the fuel consumption obtaining unit 112 is configured to determine minimum engine fuel consumption rates under each of the engine powers and engine rotation speeds corresponding to the minimum engine fuel consumption rates based on the engine fuel consumption characteristic data, specifically comprising: generating an engine fuel consumption characteristic map based on the engine fuel consumption characteristic data; and determining minimum engine fuel consumption rates under each of the engine powers and engine rotation speeds corresponding to the minimum engine fuel consumption rates according to the engine fuel consumption characteristic map.

Further, the fuel consumption obtaining unit 112 is configured to determine, minimum engine fuel consumption rates under each of the engine powers and engine rotation speeds corresponding to the minimum engine fuel consumption rates based on the engine fuel consumption characteristic data, specifically comprising: performing interpolation operation based on the engine fuel consumption characteristic data to obtain minimum engine fuel consumption rates under each of the engine powers and engine rotation speeds corresponding to the minimum engine fuel consumption rates.

Further, the obtaining module 13 is configured to obtain a weighted average value of the corresponding engine fuel consumption rates when the vehicle travels at the constant vehicle speeds under each gear ratio, specifically comprising: obtaining engine fuel consumption rates when the vehicle travels at the constant vehicle speeds under each gear ratio; and performing weighted averaging on the engine fuel consumption rates corresponding to the vehicle speeds under each gear ratio to obtain a weighted average value of the engine fuel consumption rates under each gear ratio, wherein a weight of the engine fuel consumption rates corresponding to the vehicle speeds is set according to the use frequency of the vehicle speeds.

Regarding the device in the above embodiments, the specific manners in which modules perform operations have been described in detail in the embodiments regarding the method, and details will not be described here.

A person skilled in the art can understand that all or part of the steps in the method of the above embodiments can be implemented by a program instructing related hardware. The program is stored in a storage medium, and includes several instructions for enabling a single chip computer, a chip, or a processor to perform all or part of the steps of the method described in the embodiments of the present application. However, the storage medium includes various kinds of mediums that may store program codes, such as a U disk, a mobile hard disk, a read-only memory (ROM), a random access memory (RAM), a magnetic disk or an optical disk.

The above embodiments are only preferred embodiments of the present invention, and are not intended to limit the present invention. Any modifications, equivalent alternatives, improvements, etc., which are within the scope of the appended claims, should be included in the scope of protection of the present invention.

## Claims

1. A method for determining the highest gear ratio of a transmission, comprising:
determining corresponding minimum engine fuel consumption rates when a vehicle travels at multiple constant vehicle speeds, and engine rotation speeds corresponding to the minimum engine fuel consumption rates based on engine universal characteristic data, wherein the multiple vehicle speeds are chosen from a vehicle speed range corresponding to the highest gear of the transmission;
determining a gear ratio corresponding to each minimum engine fuel consumption rate for each of the minimum engine fuel consumption rates, wherein the gear ratio is a ratio of an engine rotation speed corresponding to the minimum engine fuel consumption rate to a vehicle speed;
obtaining a weighted average value of the corresponding engine fuel consumption rates when the vehicle travels at the constant vehicle speeds under each gear ratio; and
determining the gear ratio, corresponding to the minimum value among obtained weighted average values of the engine fuel consumption rates, as the highest gear ratio of the transmission.

2. The method according to claim 1, wherein the step of determining corresponding minimum engine fuel consumption rates when a vehicle travels at multiple constant vehicle speeds, and engine rotation speeds corresponding to the minimum engine fuel consumption rates based on engine fuel consumption characteristic data comprises:
respectively calculating engine powers when the vehicle travels at each of the constant vehicle speeds for the multiple constant vehicle speeds; determining minimum engine fuel consumption rates under each of the engine powers and engine rotation speeds corresponding to the minimum engine fuel consumption rates based on the engine fuel consumption characteristic data.

3. The method according to claim 2, wherein the step of determining minimum engine fuel consumption rates under each of the engine powers and engine rotation speeds corresponding to the minimum engine fuel consumption rates based on the engine fuel consumption characteristic data comprises:
generating an engine fuel consumption characteristic map based on engine fuel consumption characteristic data; and
determining minimum engine fuel consumption rates under each of the engine powers and engine rotation speeds corresponding to the minimum engine fuel consumption rates according to the engine fuel consumption characteristic map.

4. The method according to claim 2, wherein the step of determining minimum engine fuel consumption rates under each of the engine powers and engine rotation speeds corresponding to the minimum engine fuel consumption rates based on the engine fuel consumption characteristic data comprises:
performing interpolation operation based on the engine fuel consumption characteristic data to obtain minimum engine fuel consumption rates under each of the engine powers and engine rotation speeds corresponding to the minimum engine fuel consumption rates.

5. The method according to any one of claims 1 to 4, wherein the step of obtaining a weighted average value of the corresponding engine fuel consumption rates when the vehicle travels at the constant vehicle speeds under each gear ratio comprises:
obtaining engine fuel consumption rates when the vehicle travels at the constant vehicle speeds under each gear ratio; and
performing weighted averaging on the engine fuel consumption rates corresponding to the vehicle speeds under each gear ratio to obtain a weighted average value of the engine fuel consumption rates under each gear ratio, wherein a weight of the engine fuel consumption rates corresponding to the vehicle speeds is set according to the use frequency of the vehicle speeds.

6. A device for determining the highest gear ratio of a transmission, comprising:
a fuel consumption determination module (11), configured to determine corresponding minimum engine fuel consumption rates when a vehicle travels at multiple constant vehicle speeds, and engine rotation speeds corresponding to the minimum engine fuel consumption rates based on engine fuel consumption characteristic data, wherein the multiple vehicle speeds are chosen from a vehicle speed range corresponding to the highest gear of the transmission;
a gear ratio calculation module (12), configured to determine a gear ratio corresponding to each minimum engine fuel consumption rate for each of the minimum engine fuel consumption rates, wherein the gear ratio is a ratio of an engine rotation speed corresponding to the minimum engine fuel consumption rate to a vehicle speed;
an obtaining module (13), configured to obtain a weighted average value of the corresponding engine fuel consumption rates when the vehicle travels at the constant vehicle speeds under each gear ratio; and
a gear ratio determination module (14), configured to determine the gear ratio, corresponding to the minimum value among obtained weighted average values of the engine fuel consumption rates, as the highest gear ratio of the transmission.

7. The device according to claim 6, wherein the fuel consumption determination module comprises:
a power calculation unit (111), configured to respectively calculate engine powers when the vehicle travels at each of the constant vehicle speeds for the multiple constant vehicle speeds; and
a fuel consumption obtaining unit (112), configured to determine minimum engine fuel consumption rates under each of the engine powers and engine rotation speeds corresponding to the minimum engine fuel consumption rates based on the engine fuel consumption characteristic data.

8. The device according to claim 7, wherein the fuel consumption obtaining unit is configured to determine minimum engine fuel consumption rates under each of the engine powers and engine rotation speeds corresponding to the minimum engine fuel consumption rates based on the engine fuel consumption characteristic data, comprising:
generating an engine fuel consumption characteristic map based on engine fuel consumption characteristic data; and
determining minimum engine fuel consumption rates under each of the engine powers and engine rotation speeds corresponding to the minimum engine fuel consumption rates according to the engine fuel consumption characteristic map.

9. The device according to claim 7, wherein the fuel consumption obtaining unit is configured to determine minimum engine fuel consumption rates under each of the engine powers and engine rotation speeds corresponding to the minimum engine fuel consumption rates based on the engine fuel consumption characteristic data, comprising:
performing interpolation operation based on the engine fuel consumption characteristic data to obtain minimum engine fuel consumption rates under each of the engine powers and engine rotation speeds corresponding to the minimum engine fuel consumption rates.

10. The device according to any one of claims 6 to 9, wherein the obtaining module is configured to obtain a weighted average value of the corresponding engine fuel consumption rates when the vehicle travels at the constant vehicle speeds under each gear ratio, comprising:
obtaining engine fuel consumption rates when the vehicle travels at the constant vehicle speeds under each gear ratio; and
performing weighted averaging on the engine fuel consumption rates corresponding to the vehicle speeds under each gear ratio to obtain a weighted average value of the engine fuel consumption rates under each gear ratio, wherein a weight of the engine fuel consumption rates corresponding to the vehicle speeds is set according to the use frequency of the vehicle speeds.

## Patentansprüche

1. Verfahren zur Bestimmung des maximalen Übersetzungsverhältnisses eines Getriebes, wobei das Verfahren folgendes umfasst:
Bestimmen entsprechender minimaler Kraftstoffverbrauchsraten des Motors, wenn ein Fahrzeug mit mehreren konstanten Fahrzeuggeschwindigkeiten fährt, und der Motordrehzahlen entsprechend den minimalen Kraftstoffverbrauchsraten des Motors basierend auf universellen Kenndaten des Motors, wobei die mehreren Fahrzeuggeschwindigkeiten aus einem Fahrzeuggeschwindigkeitsbereich entsprechend der maximalen Übersetzung des Getriebes ausgewählt sind;
Bestimmen eines Übersetzungsverhältnisses entsprechend jeder minimalen Kraftstoffverbrauchsrate des Motors für jede der minimalen Kraftstoffverbrauchsraten des Motors, wobei das Übersetzungsverhältnis ein Verhältnis einer Motordrehzahl entsprechend der minimalen Kraftstoffverbrauchsrate des Motors zu einer Fahrzeuggeschwindigkeit ist;
Ermitteln eines gewichteten Mittelwerts der entsprechenden Kraftstoffverbrauchsraten des Motors, wenn das Fahrzeug mit den konstanten Fahrzeuggeschwindigkeiten unter jedem Übersetzungsverhältnis fährt; und
Bestimmen des Übersetzungsverhältnisses entsprechend dem minimalen Wert unter den ermittelten gewichteten Mittelwerten der Kraftstoffverbrauchsraten des Motors als das maximale Übersetzungsverhältnis des Getriebes.

2. Verfahren nach Anspruch 1, wobei der Schritt des Bestimmens entsprechender minimaler Kraftstoffverbrauchsraten des Motors, wenn ein Fahrzeug mit mehreren konstanten Fahrzeuggeschwindigkeiten fährt, und der Motordrehzahlen entsprechend den minimalen Kraftstoffverbrauchsraten des Motors basierend auf Kenndaten des Kraftstoffverbrauchs des Motors, folgendes umfasst:
jeweilige Berechnung von Motorleistungen, wenn das Fahrzeug mit jeder der konstanten Fahrzeuggeschwindigkeiten fährt, für die mehreren konstanten Fahrzeuggeschwindigkeiten; Bestimmen minimaler Kraftstoffverbrauchsraten des Motors unter jeder der Motorleistungen und der Motordrehzahlen entsprechend den minimalen Kraftstoffverbrauchsraten des Motors, basierend auf den Kenndaten des Kraftstoffverbrauchs des Motors.

3. Verfahren nach Anspruch 2, wobei der Schritt des Bestimmens minimaler Kraftstoffverbrauchsraten des Motors unter jeder der Motorleistungen und der Motordrehzahlen entsprechend den minimalen Kraftstoffverbrauchsraten des Motors basierend auf den Kenndaten des Kraftstoffverbrauchs des Motors, folgendes umfasst:
Erzeugen eines Kennfelds des Kraftstoffverbrauchs des Motors basierend auf den Kenndaten des Kraftstoffverbrauchs des Motors; und
Bestimmen minimaler Kraftstoffverbrauchsraten des Motors unter jeder der Motorleistungen und der Motordrehzahlen entsprechend den minimalen Kraftstoffverbrauchsraten des Motors gemäß dem Kennfeld des Kraftstoffverbrauchs des Motors.

4. Verfahren nach Anspruch 2, wobei der Schritt des Bestimmens minimaler Kraftstoffverbrauchsraten des Motors unter jeder der Motorleistungen und Motordrehzahlen entsprechend den minimalen Kraftstoffverbrauchsraten des Motors basierend auf den Kenndaten des Kraftstoffverbrauchs des Motors, folgendes umfasst:
Durchführen eines Interpolationsverfahrens basierend auf den Kenndaten des Kraftstoffverbrauchs des Motors, um minimale Kraftstoffverbrauchsraten des Motors unter jeder der Motorleistungen und Motordrehzahlen entsprechend den minimalen Kraftstoffverbrauchsraten des Motors zu ermitteln.

5. Verfahren nach einem der Ansprüche 1 bis 4, wobei der Schritt des Ermittelns eines gewichteten Mittelwerts der entsprechenden Kraftstoffverbrauchsraten des Motors, wenn das Fahrzeug mit den konstanten Fahrzeuggeschwindigkeiten unter jedem Übersetzungsverhältnis fährt, umfasst:
Ermitteln von Kraftstoffverbrauchsraten, wenn das Fahrzeug mit den konstanten Fahrzeuggeschwindigkeiten unter jedem Übersetzungsverhältnis fährt; und
Durchführen gewichteter Mittelwertbildung der Kraftstoffverbrauchsraten des Motors entsprechend den Fahrzeuggeschwindigkeiten unter jedem Übersetzungsverhältnis, um einen gewichteten Mittelwert der Kraftstoffverbrauchsraten des Motors unter jedem Übersetzungsverhältnis zu ermitteln, wobei ein Gewicht der Kraftstoffverbrauchsraten des Motors entsprechend den Fahrzeuggeschwindigkeiten gemäß der Nutzungshäufigkeit der Fahrzeuggeschwindigkeiten festgesetzt ist.

6. Vorrichtung zur Bestimmung des maximalen Übersetzungsverhältnisses eines Getriebes, die folgendes umfasst:
ein Modul zur Bestimmung des Kraftstoffverbrauchs (11), das dazu konfiguriert ist, entsprechende minimale Kraftstoffverbrauchsraten des Motors, wenn das Fahrzeug mit mehreren konstanten Fahrzeuggeschwindigkeiten fährt, und der Motordrehzahlen entsprechend den minimalen Kraftstoffverbrauchsraten des Motors basierend auf den Kenndaten des Kraftstoffverbrauchs des Motors zu bestimmen, wobei die mehreren konstanten Fahrzeuggeschwindigkeiten aus einem Fahrzeuggeschwindigkeitsbereich entsprechend der maximalen Übersetzung des Getriebes ausgewählt sind;
ein Modul zur Berechnung des Übersetzungsverhältnisses (12), das dazu konfiguriert ist, ein Übersetzungsverhältnis entsprechend jeder minimalen Kraftstoffverbrauchsrate des Motors für jede der minimalen Kraftstoffverbrauchsraten des Motors zu bestimmen, wobei das Übersetzungsverhältnis ein Verhältnis einer Motordrehzahl entsprechend der minimalen Kraftstoffverbrauchsrate des Motors zu einer Fahrzeuggeschwindigkeit ist;
ein Ermittlungsmodul (13), das dazu konfiguriert ist, einen gewichteten Mittelwert der entsprechenden Kraftstoffverbrauchsraten des Motors zu ermitteln, wenn das Fahrzeug mit den konstanten Fahrzeuggeschwindigkeiten unter jedem Übersetzungsverhältnis fährt; und
ein Modul zur Bestimmung des Übersetzungsverhältnisses (14), das dazu konfiguriert ist, das Übersetzungsverhältnis entsprechend dem minimalen Wert unter den ermittelten gewichteten Mittelwerten der Kraftstoffverbrauchsraten des Motors als das maximale Übersetzungsverhältnis des Getriebes zu bestimmen.

7. Vorrichtung nach Anspruch 6, wobei das Modul zur Bestimmung des Kraftstoffverbrauchs folgendes umfasst:
eine Einheit zur Berechnung der Leistung (111), die dazu konfiguriert ist, die jeweiligen Motorleistungen zu berechnen, wenn das Fahrzeug mit jeder der konstanten Fahrzeuggeschwindigkeiten für die mehreren konstanten Fahrzeuggeschwindigkeiten fährt; und
eine Einheit zur Ermittlung des Kraftstoffverbrauchs (112), die dazu konfiguriert ist, minimale Kraftstoffverbrauchsraten des Motors unter jeder der Motorleistungen und Motordrehzahlen entsprechend den minimalen Kraftstoffverbrauchsraten des Motors basierend auf den Kenndaten des Kraftstoffverbrauchs des Motors zu bestimmen.

8. Vorrichtung nach Anspruch 7, wobei die Einheit zur Ermittlung des Kraftstoffverbrauchs dazu konfiguriert ist, minimale Kraftstoffverbrauchsraten des Motors unter jeder der Motorleistungen und Motordrehzahlen entsprechend den minimalen Kraftstoffverbrauchsraten des Motors basierend auf den Kenndaten des Kraftstoffverbrauchs des Motors zu bestimmen, und folgendes umfasst:
Erzeugen eines Kennfelds des Kraftstoffverbrauchs des Motors basierend auf Kenndaten des Kraftstoffverbrauchs des Motors; und
Bestimmen minimaler Kraftstoffverbrauchsraten des Motors unter jeder der Motorleistungen und Motordrehzahlen entsprechend den minimalen Kraftstoffverbrauchsraten des Motors gemäß dem Kennfeld des Kraftstoffverbrauchs des Motors.

9. Vorrichtung nach Anspruch 7, wobei die Einheit zur Ermittlung des Kraftstoffverbrauchs dazu konfiguriert ist, minimale Kraftstoffverbrauchsraten des Motors unter jeder der Motorleistungen und Motordrehzahlen entsprechend den minimalen Kraftstoffverbrauchsraten des Motors basierend auf den Kenndaten des Kraftstoffverbrauchs des Motors zu bestimmen, und folgendes umfasst:
Durchführen eines Interpolationsverfahrens basierend auf den Kenndaten des Kraftstoffverbrauchs des Motors, um minimale Kraftstoffverbrauchsraten des Motors unter jeder der Motorleistungen und Motordrehzahlen entsprechend den minimalen Kraftstoffverbrauchsraten des Motors zu bestimmen.

10. Vorrichtung nach einem der Ansprüche 6 bis 9, wobei das Ermittlungsmodul dazu konfiguriert ist, einen gewichteten Mittelwert der entsprechenden Kraftstoffverbrauchsraten des Motors zu ermitteln, wenn das Fahrzeug mit den konstanten Fahrzeuggeschwindigkeiten unter jedem Übersetzungsverhältnis fährt, und folgendes umfasst:
Ermitteln der Kraftstoffverbrauchsraten des Motors, wenn das Fahrzeug mit den konstanten Fahrzeuggeschwindigkeiten unter jedem Übersetzungsverhältnis fährt; und
Durchführen gewichteter Mittelwertbildung der Kraftstoffverbrauchsraten des Motors entsprechend den Fahrzeuggeschwindigkeiten unter jedem Übersetzungsverhältnis, um einen gewichteten Mittelwert der Kraftstoffverbrauchsraten des Motors unter jedem Übersetzungsverhältnis zu ermitteln, wobei ein Gewicht der Kraftstoffverbrauchsraten des Motors entsprechend den Fahrzeuggeschwindigkeiten gemäß der Nutzungshäufigkeit der Fahrzeuggeschwindigkeiten festgesetzt ist.

## Revendications

1. Procédé pour déterminer le rapport de transmission le plus élevé d'une transmission, comprenant les étapes suivantes :
déterminer des taux de consommation de carburant moteur minimum correspondants lorsqu'un véhicule circule à différentes vitesses de véhicule constantes, et des vitesses de rotation moteur correspondant aux taux de consommation de carburant moteur minimum sur la base de données caractéristiques universelles du moteur, les différentes vitesses de véhicule étant choisies dans une gamme de vitesses de véhicule qui correspond au rapport le plus élevé de la transmission,
déterminer un rapport de transmission correspondant à chaque taux de consommation de carburant moteur minimum pour chacun des taux de consommation de carburant moteur minimum, le rapport de transmission étant un rapport entre une vitesse de rotation moteur correspondant au taux de consommation de carburant moteur minimum et une vitesse de véhicule, obtenir une valeur moyenne pondérée des taux de consommation de carburant moteur correspondants lorsque le véhicule circule aux vitesses de véhicule constantes pour chaque rapport de transmission ; et
déterminer le rapport de transmission qui correspond à la valeur minimum parmi des valeurs moyennes pondérées obtenues des taux de consommation de carburant moteur comme étant le rapport de transmission le plus élevé de la transmission.

2. Procédé selon la revendication 1, dans lequel l'étape de détermination des taux de consommation de carburant moteur minimum correspondants lorsqu'un véhicule circule à différentes vitesses de véhicule constantes, et des vitesses de rotation moteur correspondant aux taux de consommation de carburant moteur minimum sur la base de données caractéristiques de consommation de carburant moteur, consiste à :
calculer respectivement des puissances moteur lorsque le véhicule circule à chacune des vitesses de véhicule constantes pour les différentes vitesses de véhicule constantes, déterminer des taux de consommation de carburant moteur minimum à chacune des puissances moteur et des vitesses de rotation moteur correspondant aux taux de consommation de carburant moteur minimum sur la base des données caractéristiques de consommation de carburant moteur.

3. Procédé selon la revendication 2, dans lequel l'étape de détermination de taux de consommation de carburant moteur minimum à chacune des puissances moteur et vitesses de rotation moteur correspondant aux taux de consommation de carburant moteur minimum sur la base des données caractéristiques de consommation de carburant moteur consiste à :
générer un diagramme caractéristique de consommation de carburant moteur sur la base des données caractéristiques de consommation de carburant moteur, et
déterminer des taux de consommation de carburant moteur minimum à chacune des puissances moteur et vitesses de rotation moteur correspondant aux taux de consommation de carburant moteur minimum selon le diagramme caractéristique de consommation de carburant moteur.

4. Procédé selon la revendication 2, dans lequel l'étape de détermination de taux de consommation de carburant moteur minimum à chacune des puissances moteur et vitesses de rotation moteur correspondant aux taux de consommation de carburant moteur minimum sur la base des données caractéristiques de consommation de carburant moteur consiste à : exécuter une opération d'interpolation sur la base des données caractéristiques de consommation de carburant moteur afin d'obtenir des taux de consommation de carburant moteur minimum à chacune des puissances moteur et vitesses de rotation moteur correspondant aux taux de consommation de carburant moteur minimum.

5. Procédé selon l'une quelconque des revendications 1 à 4, dans lequel l'étape d'obtention d'une valeur moyenne pondérée des taux de consommation de carburant moteur correspondants lorsque le véhicule circule aux vitesses de véhicule constantes pour chaque rapport de transmission consiste à :
obtenir des taux de consommation de carburant moteur correspondants lorsque le véhicule circule aux vitesses de véhicule constantes pour chaque rapport de transmission, et
établir une moyenne pondérée des taux de consommation de carburant moteur correspondant aux vitesses de véhicule pour chaque rapport de transmission afin d'obtenir une valeur moyenne pondérée des taux de consommation de carburant moteur pour chaque rapport de transmission, une pondération des taux de consommation de carburant moteur correspondant aux vitesses de véhicule étant définie en fonction de la fréquence d'utilisation des vitesses de véhicule.

6. Dispositif pour déterminer le rapport de transmission le plus élevé d'une transmission, comprenant :
un module de détermination de la consommation de carburant (11),
configuré pour déterminer des taux de consommation de carburant moteur minimum correspondants lorsqu'un véhicule circule à différentes vitesses de véhicule constantes, et des vitesses de rotation moteur correspondant aux taux de consommation de carburant moteur minimum sur la base de données caractéristiques de consommation de carburant moteur, les différentes vitesses de véhicule étant choisies dans une gamme de vitesses de véhicule qui correspond au rapport le plus élevé de la transmission,
un module de calcul du rapport de transmission (12),
configuré pour déterminer un rapport de transmission correspondant à chaque taux de consommation de carburant moteur minimum pour chacun des taux de consommation de carburant moteur minimum, le rapport de transmission étant un rapport entre une vitesse de rotation moteur correspondant au taux de consommation de carburant moteur minimum et une vitesse de véhicule ;
un module d'obtention (13),
configuré pour obtenir une valeur moyenne pondérée des taux de consommation de carburant moteur correspondants lorsque le véhicule circule aux vitesses de véhicule constantes pour chaque rapport de transmission ; et
un module de détermination de rapport de transmission (14),
configuré pour déterminer le rapport de transmission qui correspond à la valeur minimum parmi des valeurs moyennes pondérées obtenues des taux de consommation de carburant moteur comme étant le rapport de transmission le plus élevé de la transmission.

7. Dispositif selon la revendication 6, dans lequel le module de détermination de la consommation de carburant comprend :
une unité de calcul de puissance (111),
configurée pour calculer respectivement des puissances moteur lorsque le véhicule circule à chacune des vitesses de véhicule constantes pour les différentes vitesses de véhicule constantes, et
une unité d'obtention de consommation de carburant (112),
configurée pour déterminer des taux de consommation de carburant moteur minimum à chacune des puissances moteur et des vitesses de rotation moteur correspondant aux taux de consommation de carburant moteur minimum sur la base des données caractéristiques de consommation de carburant moteur.

8. Dispositif selon la revendication 7, dans lequel l'unité d'obtention de la consommation de carburant est configurée pour déterminer des taux de consommation de carburant moteur minimum à chacune des puissances moteur et des vitesses de rotation moteur correspondant aux taux de consommation de carburant moteur minimum sur la base des données caractéristiques de consommation de carburant moteur, consistant à :
générer un diagramme caractéristique de consommation de carburant moteur sur la base de données caractéristiques de consommation de carburant moteur, et
déterminer des taux de consommation de carburant moteur minimum à chacune des puissances moteur et vitesses de rotation moteur correspondant aux taux de consommation de carburant moteur minimum selon le diagramme caractéristique de consommation de carburant moteur.

9. Dispositif selon la revendication 7, dans lequel l'unité d'obtention de la consommation de carburant est configurée pour déterminer des taux de consommation de carburant moteur minimum à chacune des puissances moteur et des vitesses de rotation moteur correspondant aux taux de consommation de carburant moteur minimum sur la base des données caractéristiques de consommation de carburant moteur, consistant à :
exécuter une opération d'interpolation sur la base des données caractéristiques de consommation de carburant moteur afin d'obtenir des taux de consommation de carburant moteur minimum à chacune des puissances moteur et des vitesses de rotation moteur correspondant aux taux de consommation de carburant moteur minimum.

10. Dispositif selon l'une quelconque des revendications 6 à 9, dans lequel le module d'obtention est configuré pour obtenir une valeur moyenne pondérée des taux de consommation de carburant moteur correspondants lorsque le véhicule circule aux vitesses de véhicule constantes pour chaque rapport de transmission, consistant à :
obtenir des taux de consommation de carburant moteur lorsque le véhicule circule aux vitesses de véhicule constantes pour chaque rapport de transmission ; et
établir une moyenne pondérée des taux de consommation de carburant moteur correspondant aux vitesses de véhicule pour chaque rapport de transmission afin d'obtenir une valeur moyenne pondérée des taux de consommation de carburant moteur pour chaque rapport de transmission, une pondération des taux de consommation de carburant moteur correspondant aux vitesses de véhicule étant définie en fonction de la fréquence d'utilisation des vitesses de véhicule.
